# EUROPEAN PATENT APPLICATION

(11) **EP 1 110 914 A2**
(43) Date of publication of application: **27.06.2001**
(21) Application number: 00309883.7
(22) Date of filing: 07.11.2000
(51) Int. Cl.: C02F 1/28

(54) **Water treatment method and apparatus**

(30) Priority: 19.11.1999 US 166570 P
(71) Applicant: ROHM AND HAAS COMPANY, Philadelphia, Pennsylvania 19106-2399 (US)
(72) Inventor: Miers Jr., Jay Alfred, Langhorne, Pennsylvania 19047 (US); Isacoff, Eric Gilbert, Richboro, Pennsylvania 18954 (US); Lundquist, Eric Gustave, North Wales, Pennsylvania 19454 (US)
(74) Representative: Buckley, Guy Julian

(57) **Abstract**

An apparatus and a method for water treatment is disclosed where a dealkalization treatment cycle is used in conjunction with a pH adjustment cycle or with a regeneration cycle or with both. The treatment cycle involves contacting untreated water with weak acid cation exchange resin, optionally followed by pH adjustment. The regeneration cycle includes contacting partially exhausted weak acid cation exchange resin with weak acid regenerants, in particular carbonic acid; use of weak acid regenerants avoids introduction of excessive deposits of inorganic salts into the environment. The water treatment system can also be arranged to permit concurrent treatment and regeneration cycles and is useful for providing treated water on demand for both home and beverage service use.

## Description

### BACKGROUND

The present invention relates to a method and apparatus for treating water. The present invention involves a method and apparatus for water treatment using ion exchange resins, wherein (a) the exhausted resin may be regenerated on-site without producing large amounts of regenerant waste streams that are harmful to the environment, or (b) the treated water may be subjected to pH adjustment to minimize equipment corrosion issues. In particular, the present invention involves water treatment using weak acid cation exchange resins with on-site regeneration and pH adjustment of the treated water in a single system.

Excessive hardness and alkalinity in source waters can contribute to unpleasant taste in both in-home drinking water and water used to produce beverages in the food service industry. For example, it is undesirable to have high levels of hardness and alkalinity in water used for beverage production since it reduces the acidity of the beverage and affects taste in both hot and cold beverages. Additionally, excessive hardness and alkalinity can cause damage to plumbing and appliances due to buildup of insoluble carbonates.

Most currently available systems for treating water on the household scale or the light industrial scale (such as beverage use) include the use of reverse osmosis membranes, carbon filtration, ion exchange resins, or combinations thereof. Carbon filtration removes sediment and chlorine from water, but does not remove hardness or alkalinity. Reverse osmosis systems of a sufficient size to provide full instantaneous flow for whole-house use or in food service applications are expensive and large in size, requiring extensive use of space. Smaller reverse osmosis systems designed to continuously treat water to meet instantaneous flow requirements must store the product water, thus creating a requirement to re-treat the stored water to avoid bacterial growth and microbial contamination. Additionally, reverse osmosis systems generate large quantities of reject water resulting in low efficiency for treated water production.

Systems, such as described in US Patent No. 5,273,070, are commonly used for water softening and comprise a small water treatment tank containing ion exchange resin, wherein the water is introduced to the tank through an inlet, passes through the tank and exits through an outlet. The typical regenerant for such an ion exchange water softening system is sodium chloride (salt). However, use of salt as a regenerant for home water softening systems, such as described in US Patent No. 5,273,070, results in high concentrations of chloride and sodium in the waste water and added sodium to the treated water. The high chloride concentration in the waste water can damage local sewer systems and cause increased levels of chloride and sodium in the local environment. The addition of sodium to the drinking water is an unnecessary and unwanted complication for many people, especially those on restricted sodium diets, and may alter the desired taste of a beverage in food service applications. Problems related to sodium can be avoided by using inorganic acids, such as sulfuric acid or hydrochloric acid, as regenerants for ion exchange resins, but their use suffers from the need to handle hazardous acidic materials and the discharge of corrosive materials into the environment.

US Patent 5,776,333 discloses a system to treat water used in post-mix beverage dispenser applications, where water is provided which is sterile, contains reduced hardness and alkalinity and is free of organic volatiles. The system involves heating water to remove volatile organic impurities, to breakdown and precipitate certain solids and to provide sterilized water. Potential deficiencies of this system include the need to cool the heated water and store the treated water before use.

Systems based on reverse osmosis and those described in U.S. Patent No. 5,776,333 do not provide treated water at the instantaneous flow rates required by the present invention.

There is therefore a need for a compact and cost effective water treatment method and apparatus which (1) can produce the required instantaneous flows using municipal water distribution system pressures, (2) is optionally regenerable, (3) does not add undesired ions to the treated water, (4) does not introduce high levels of undesirable regeneration step effluents to the environment, and (5) does not result in damage to local sewer systems.

### STATEMENT OF INVENTION

The present invention provides method for treating water comprising (a) passing water to be treated through an inlet of a first vessel containing 5 to 140 liters of a weak acid cation exchange resin until 30 to 80 percent of available ion exchange capacity, based on equivalents, of the weak acid cation exchange resin has been exhausted, to provide treated water at an end use outlet at an instantaneous flow rate of 4 to 40 liters per minute and at end use outlet pressures within zero to 200 kiloPascals of inlet pressures, so that the treated water has hardness and alkalinity values of less than 150 parts per million, expressed as calcium carbonate weight equivalents; then (b) regenerating the weak acid cation exchange resin for reuse in step (a) with a regenerant agent selected from weak acids having a pKₐ between 3 and 7, for a time sufficient to regenerate from 50 to 100 percent, based on equivalents, of the exhausted ion exchange capacity produced in step (a); and (c) repeating steps (a) and (b) to provide treated water as needed.

In another embodiment the present invention provides the aforementioned method further comprising adjusting the pH of the treated water from step (a) to a pH between 4.5 and 9.5 by one or more processes selected from treatment with weak base anion exchange resin, degassing membrane treatment, sonication and blending with untreated water, at a point prior to the end use outlet and after the vessel containing the weak acid cation exchange resin.

The present invention also provides a regenerable water treatment system comprising (a) a treatment cycle comprising 5 to 140 liters of a weak acid cation exchange resin in a first vessel having an inlet and an outlet through which water to be treated is passed until 30 to 80 percent of available ion exchange capacity, based on equivalents, of the weak acid cation exchange resin has been exhausted, to provide treated water at an end use outlet at an instantaneous flow rate of 4 to 40 liters per minute and at end use outlet pressures within zero to 200 kiloPascals of inlet pressures, so that the treated water has hardness and alkalinity values of less than 150 parts per million, expressed as calcium carbonate weight equivalents; and (b) a regeneration cycle comprising a regenerant agent selected from weak acids having a pKₐ between 3 and 7, which is contacted with the weak acid cation exchange resin after the treatment cycle for a time sufficient to regenerate from 50 to 100 percent, based on equivalents, of the exhausted ion exchange capacity produced in the treatment cycle; wherein the treatment and regeneration cycles are repeated to provide treated water as needed.

In another aspect, the present invention provides a water treatment apparatus comprising (a) a first vessel equipped with an inlet and an outlet, the first vessel containing weak acid cation ion exchange resin; (b) a second vessel equipped with an inlet and an outlet, the second vessel containing a means for adjusting pH of treated water; and (c) a third vessel, equipped with an inlet and an outlet, the third vessel containing regenerant agent suitable for regenerating weak acid cation ion exchange resin within the first vessel (a); wherein the second vessel is flowably connected in series with the outlet of the first vessel, the third vessel is flowably connected in series with the first vessel and the second and third vessels are not otherwise connected; and wherein each of the vessels is flowably connected as indicated by a plurality of valve means.

In yet another aspect, the present invention provides an apparatus as described above further comprising a fourth vessel, containing weak acid cation exchange resin, flowably connected in parallel fashion relative to the first vessel at points immediately prior to and immediately after the first vessel by valve means so that water flow may be alternately switched between the first vessel and the fourth vessel.

### BRIEF DESCRIPTION OF THE DRAWING

Figure 1 is a schematic diagram of one embodiment of the water treatment apparatus of the present invention.

Figure 2 is a side view of an embodiment of the water treatment vessel of the present invention involving an optional distributor system.

Figure 3 is a schematic diagram of another embodiment of the water treatment apparatus of the present invention having multiple water treatment vessels which permit concurrent treatment and regeneration.

### DETAILED DESCRIPTION

We have discovered a compact, cost effective system which is capable of producing water of reduced hardness and alkalinity from municipal water at flow rates (4 to 40 liters/minute) required for both home and beverage service use. This system is operational under standard water line pressures (200 to 700 kiloPascals (kPa), typically 400 to 600 kPa) and is optionally regenerable using weak acid regenerants which pose no hazard to the environment.

As used herein, the following terms have the designated definitions, unless the context clearly indicates otherwise. "Exhaustion" of ion exchange resins means that all available ion exchange capacity (on an equivalence basis) has been utilized; "partial exhaustion" of ion exchange resins means that less than 100% of the available ion exchange capacity has been utilized, for example 70% exhaustion corresponds to having 30% of the ion exchange capacity still available and useful for exchanging with ions. "Instantaneous flow" refers to the on-demand availability of treated water at the end use outlet of the treatment process concurrent with the supply of source water at the inlet to the treatment process; this is to be contrasted with the availability of water from storage tanks of treated water. The following abbreviations are used herein: WAC = weak acid cation exchange resin; SBA = strong base anion exchange resin; mg = milligrams; L = liters; mg/L (milligrams per liter) = ppm (parts per million by weight/volume), for example, mg/L as CaCO₃; L/min = liters per minute. When treated water characteristics, such as alkalinity or hardness levels are referred to, these values are expressed in terms of ppm of CaCO₃ weight equivalents. Unless otherwise specified, ranges listed are to be read as inclusive and combinable, temperatures are in degrees centigrade (°C), pressures are in kiloPascals (kPa), and references to percentages (%) are by weight.

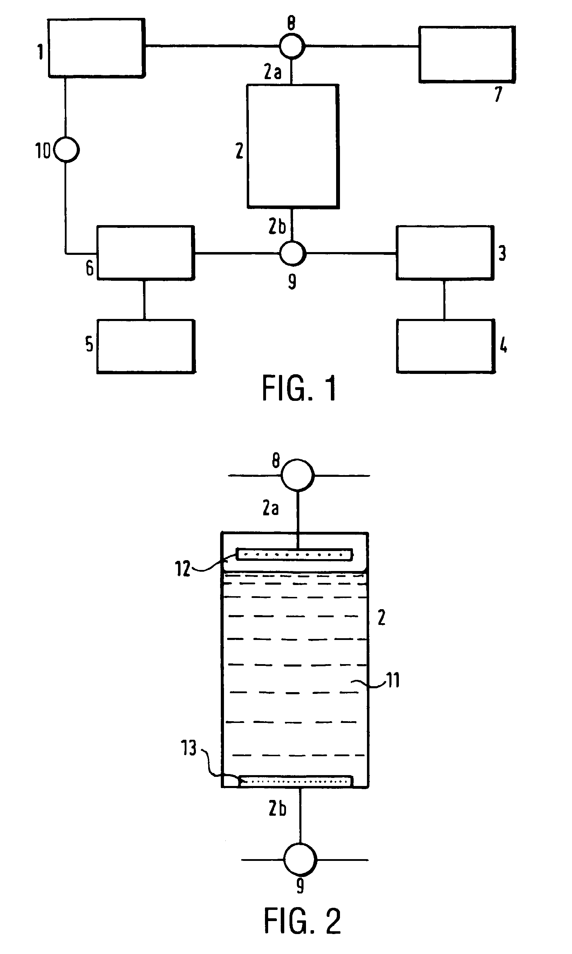

In one embodiment of the invention, the apparatus comprises a water treatment vessel **2** having an inlet **2a** and an outlet **2b** and containing a bed of ion exchange resin **11**, a pH adjustment vessel **3**, and a regenerant solution vessel **6** (Figure **1**).

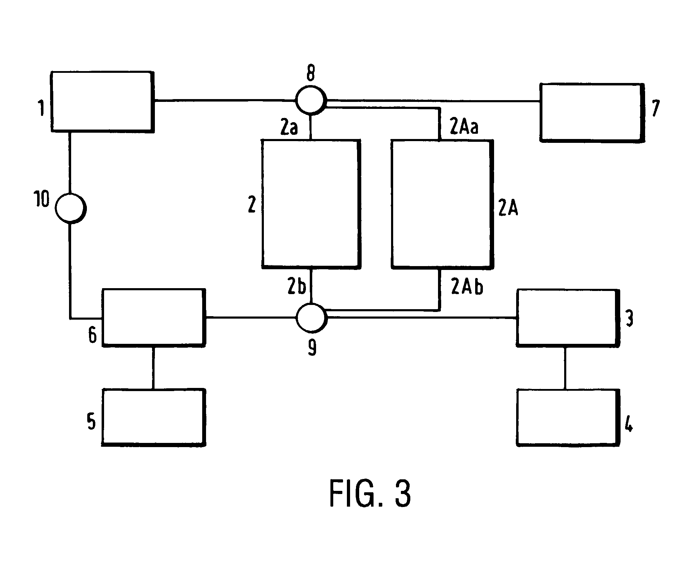

In another embodiment (Figure 3), the apparatus further comprises a second water treatment vessel **2A** having an inlet and outlet and connected in parallel fashion relative to water treatment vessel **2**. The water treatment vessels **2** and **2A** can optionally include a suitable distributor **12** located near the inlet **2a** to disperse untreated water over the ion exchange resin bed **11** and a suitable collector/distributor **13** located near the outlet **2b** to aid in the removal of the treated water from the water treatment vessels **2** and **2A** (see Figure 2).

All of the vessels are flowably connected by a plurality of valve means (**8**, **9** and **10**) for controlling water flow, such as multidirectional valves, valve assemblies, valve manifold systems or combinations thereof. The valve means are used to control flow to and from the vessels via corresponding inlets and outlets and include pressure valves that permit flow in one direction such that the valve opens when pressure is applied from one side, but which otherwise remains closed.

The water treatment vessel **2** is flowably connected to a source water **1**, to the pH adjustment vessel **3**, to the regenerant solution vessel **6** and to a regenerant waste disposal outlet **7**; however, the pH adjustment vessel **3** and the regenerant solution vessel **6** are not otherwise connected (Figure 1). Water source **1** provides the water to be treated and also the makeup water for preparing regenerant solution in regenerant solution vessel **6**, the latter acting as mixing and storage container for regenerant solution; a regenerant agent source **5** feeds into the regenerant solution vessel **6**. Fully treated water is provided at end use outlet **4**.

One embodiment of the water treatment system of the present invention comprises two basic cycles: a treatment cycle and a regeneration cycle. In the treatment cycle, untreated water from a water source **1** is introduced to the water treatment vessel **2**, containing 5 to 140 liters of weak acid cation exchange resin, through inlet **2a** via valve means **8**. The water is treated by contact with ion exchange resin bed **11**, optionally through distributor **12**, until 30 to 80% of available ion exchange capacity, based on equivalents, has been exhausted. The treated water exits the water treatment tank **2** by outlet **2b**, flows through valve means **9** directly to end use outlet **4** to provide water at an instantaneous flow rate of 4 to 40 liters per minute and at end use outlet pressures within zero to 200 kPa of inlet pressures, so that the treated water has hardness and alkalinity values of less than 150 parts per million, expressed as calcium carbonate weight equivalents. Optionally the treated water is directed to pH adjustment vessel **3** (from treatment vessel **2**), where the pH of the treated water is adjusted as described below, and then to end use outlet **4**. This fully treated water available at end use outlet **4** can be used for drinking, beverage preparation or other uses. In the regeneration cycle, untreated water from source **1** is combined at regenerant solution vessel **6** with a weak acid regenerant from regenerant agent source **5** to produce a regenerant solution which is introduced to the water treatment vessel **2** through outlet **2b** by valve means **9**. As the regenerant solution is passed through the water treatment vessel **2** from the outlet **2b** to the inlet **2a**, a portion of the exhausted ion exchange capacity is regenerated. The regenerant agent is selected from weak acids having a pKₐ between 3 and 7 for a time sufficient to regenerate from 50 to 100%, based on equivalents, of the exhausted ion exchange capacity produced in the treatment cycle. From the inlet **2a**, the used regenerant solution is directed to regenerant waste disposal outlet **7** via valve means **8**. Depending on the particular regenerant agent used, the regenerant solution vessel **6** can be a simple valve, an in-line mixing valve or static mixer, a mixing tank or any other means which allows the preparation of a regenerant solution of appropriate concentration; preferably vessel **6** is a mixing tank.

Another embodiment of the water treatment system and method of the present invention comprises a dealkalization cycle and a pH adjustment cycle. In the dealkalization cycle, untreated water from a water source **1** is introduced to the water treatment vessel **2** through inlet **2a** via valve means **8** as described above. The treated water exits the water treatment tank **2** by outlet **2a**, flows through valve means **9** to pH adjustment vessel **3**, where the pH of the treated water is adjusted to a pH in the range of 4.5 to 9.5 by one or more processes selected from treatment with weak base anion exchange resin, degassing membrane treatment, sonication and blending with untreated water, and then to end use outlet **4**. Optionally, regeneration of the partially exhausted resin in vessel **2** may occur as described above or by use of a second vessel (**2A**) connected in parallel fashion relative to the first vessel (**2**) so that partially exhausted weak acid cation exchange resin in the first vessel (**2**) may be replaced with regenerated weak acid cation exchange resin during the passing of water through the second vessel (**2A**) and the dealkalization cycle is conducted alternately in the first (**2**) and second vessels (**2A**) from thereon to provide treated water as needed. When two water treatment vessels are used in the water treatment system of the present invention, the combined volume of the two weak acid cation exchange resin beds is 5 to 140 liters, preferably from 14 to 28 liters.

The water treatment apparatus, system and method of the present invention may optionally be configured so that treatment and regeneration cycles can occur concurrently. This can be accomplished by the use of multiple water treatment vessels **2** and **2A** (see Figure 3) corresponding to having one vessel in the service mode (**2**) while the other vessel is in the regeneration mode (**2A**). This will require multiple connector lines and inlets (**2a, 2Aa**) and outlets (**2b**, **2Ab**) corresponding to treatment vessels **2** and **2A**, from the water source **1**, through valve means **8** and **9**. This corresponds to conducting the treatment step in a second vessel connected in parallel fashion relative to the first vessel so that the weak acid cation exchange resin in the first vessel is concurrently regenerated during the passing of water through the second vessel.

In accordance with the present invention, optional means may be used for automatic regeneration of the weak acid cation exchange resins when the resins have been partially exhausted. Flow valves operated by control devices, such as flow sensors and timers, are used to connect the regenerant solution with the vessel requiring regeneration and diverting source water flow to the vessel to be used for dealkalization treatment. In this manner, the automated flow valves provide alternating, intermittent connection among the various vessels, source water and regenerant solutions such that (a) the vessel connected to the regenerant solution is prevented from flowing to the end use outlet and (b) the vessel not connected to the regenerant solution is allowed to provide treated water to the end use outlet. As a result, continuous water treatment, with alternating, intermittent and automatic regeneration may be provided when multiple treatment vessels containing weak acid cation exchange resin are used.

Alternatively, if multiple treatment vessels are not used, that is, only a single treatment vessel is used, then the same approach to automatic regeneration as described above may be used, except that the availability of treated water is not continuous, but is interrupted during the sequence when the regeneration is taking place. This single treatment vessel system may be most advantageously used when the automated flow control valves are operated such that the regeneration cycle takes place during periods where treated water is not needed, such as during the overnight hours when commercial food and beverage service facilities are not providing service to the public or when home water treatment systems are not in use.

The present invention is particularly useful in household, food service and light industrial water softening applications where maintenance of water flow and pressure is desired. An advantage of the present invention is the ability to provide satisfactory instantaneous treated water flow rates under low pressure drop conditions in a compact and space-efficient manner, compared to water treatment systems heretofore available.

The instantaneous flow rates of treated water provided by the present invention are from 4 to 40 L/min, preferably from 10 to 35 L/min, more preferably from 15 to 30 L/min and most preferably at least 20 L/min.

Typical inlet line pressures for the water to be treated are from 200 to 700 kPa and more typically from 400 to 600 kPa. The pressure drop between the inlet water pressure and the treated water end use outlet pressure using the method and apparatus of the present invention is from zero to 200 kPa, preferably from zero to less than 170 kPa and more preferably from zero to less than 140 kPa.

Representative of the compactness of the water treatment system of the present invention is the ability to provide the aforementioned instantaneous treated water flow rates under minimum pressure drop conditions using relatively small volumes of weak cation exchange resin for treatment of the water. Volumes of weak acid cation exchange resin used in the treatment cycle of the present invention are from 5 to 140 liters, preferably from 7 to less than 100 liters, more preferably from 10 to less than 50 liters, and most preferably from 14 to 28 liters.

The primary purpose of the dealkalization treatment cycle is to remove hardness and alkalinity from the source water. However, it is highly desirable to achieve this result in an efficient manner with minimum use of space and time, attributes which are common requirements of in-home drinking water and food-beverage service industry systems. Thus, the water treatment system of the present invention achieves a maximized efficiency of hardness-alkalinity removal in short times with economical space utilization by operating the treatment and regeneration cycles in a controlled manner. The treatment cycle is conducted such that the water to be treated is passed through the weak acid cation exchange resin until from 30 to 80%, preferably from 40 to 70% and more preferably from 50 to 60%, of the available ion exchange capacity, based on equivalents, has been exhausted. Typically the regeneration cycle is conducted by contacting the partially exhausted weak acid cation exchange resin with regenerant for a sufficient time to regenerate from 50 to 100%, preferably from 75 to 100% and more preferably from 90 to 100%, based on equivalents, of the exhausted ion exchange capacity produced in the treatment step. These conditions are representative of typical operation to balance efficiency of hardness-alkalinity removal and regeneration using the ion exchange resin system of the present invention.

The ion exchange resins useful in the present invention will remove hardness and alkalinity. In general, such ion exchange resins comprise weak acid cation (WAC) exchange resins and more preferably those WAC resins based on crosslinked methacrylic acid polymers. Optionally, a mixed bed comprising weak acid cation and strong base anion exchange resins may be used in some systems. The weak acid cation exchange resins useful in the present invention can be generally described as copolymers of methacrylic acid and divinylbenzene (21 CFR §173.25); alternatively, crosslinked acrylic acid polymers are also suitable. Examples of suitable WAC include, for example, IMAC™ HP333 ion exchange resin and Amberlite™ IRC50 ion exchange resin. Strong base anion exchange resins useful in the present invention include, for example, quaternary ammonium forms of crosslinked acrylic gel polymers, such as Amberlite™ IRA458 ion exchange resin; and quaternary ammonium forms of crosslinked styrenic polymers, such as Amberlite™ IRA900 and Amberlite™ IRA400 ion exchange resins. IMAC™ and Amberlite™ are trademarks of Rohm and Haas Company, Philadelphia, PA, USA.

When weak acid cation exchange resins are used to reduce hardness and alkalinity, the pH of the effluent will typically be below 6. Water with a pH lower than 6 may be corrosive to the copper pipes generally used in the home, to home and commercial appliances, and to equipment typically used in the preparation of food service beverages. As a result, for water treated by WAC, pH adjustment is desirable. Such pH adjustment can be accomplished using any of a number of means known to those skilled in the art. It is desirable that pH adjustment occur with no significant reduction in system water pressure, in contrast to that which occurs with industrial degassification techniques (for example, reduction to atmospheric pressure conditions typical of forced draft and vacuum degassification techniques, followed by repumping to re-establish pressure). In addition, the use of neutralizing chemicals is undesirable due to safety and handling issues. Thus, it is preferred to use pH adjustment means such as: weak base anion exchange resin treatment, degassing membranes, sonication and blending with untreated water. It is especially preferred to use degassing membranes and sonication devices.

In certain applications, such as providing treated water for beverage use, for example, carbonated beverages, the pH of the treated water need not be adjusted before being used in the beverage. In many cases, the pH of the beverage composition itself is acidic and there is no need for adjusting the pH of the treated water to values above 6. This is particularly applicable for systems where the equipment used to provide treated water is corrosion resistant, such as for plastic or coated metal containers and transfer lines. However, to be suitable for use in most home and commercial equipment, where corrosion is a potential problem, such as is typically encountered in the preparation of food service beverages, it is preferable to adjust the pH of the treated water, typically to a pH from 4.5 to 9.5, preferably from 6 to 9 and more preferably from 6.5 to 8.5.

In addition to having the aforementioned pH properties, in order to be suitable in home and commercial use, water treated by the method of present invention has the following properties: alkalinity of less than 150 ppm (as CaCO₃ weight equivalent), preferably less than 120 ppm and more preferably less than 100 ppm; hardness of less than 150 ppm (as CaCO₃), preferably less than 100 ppm and more preferably less than 80 ppm. In addition to the above requirements, it also preferred that the water contain low levels of other environmentally harmful ions such as, for example, nitrate, chloride and sulfate. For water containing these contaminants, the preferred levels are as follows: nitrate levels of less than 50 ppm, preferably less than 25 ppm and more preferably less than 10 ppm; chloride levels of less than 400 ppm (as CaCO₃), preferably less than 300 ppm and more preferably less than 250 ppm; and sulfate levels of less than 400 ppm (as CaCO₃), preferably less than 300 ppm and more preferably less than 250 ppm.

The weak acid regenerant useful in the regeneration cycle can be any weak acid having a pKₐ between 3 and 7, preferably between 4 and 7, and most preferably between 4 and 6.5. Suitable weak acids include, for example, carbonic acid and carboxylic acids such as acetic acid, citric acid, maleic acid, lactic acid and mixtures thereof. Use of the aforementioned regenerants, which are environmentally compatible, does not add undesirable effluents to the environment, such as is the case with conventional water softening processes using salt regenerant. Especially preferred regenerant agents are citric acid and carbonic acid.

Where carbonic acid is used as the regenerant, it is typical to produce carbonic acid using carbon dioxide gas bubbled into water (process or raw water) at pressures from about 500 to 900 kPa using a mixing tank. Standard carbonators, such as those used in conventional beverage production, may also be utilized; however, the effectiveness of the carbonic acid regeneration will be improved when a separate water carbonating tank is used (increased solubility of the CO₂). As shown in TABLE 1, the concentration of carbonic acid is a function of the pressure of CO₂ and the temperature of the water in which the CO₂ is dissolved. It is, therefore, desirable to maintain a constant pressure throughout the system in order to optimize the regeneration efficiency.

**TABLE 1**

| Effect of Pressure and Temperature on CO₂ Solubility in Water* | | | | |
|---|---|---|---|---|
| **Pressure (kPa)** | **Pressure (bar)** | **CO**_{**2**} **Conc @ 15° C (ppm)** | **CO**_{**2**} **Conc @ 20° C (ppm)** | **CO**_{**2**} **Conc @ 25° C (ppm)** |
| 101 | 1 | 2,523 | 2,174 | 1,876 |
| 507 | 5 | 12,613 | 10,868 | 9,381 |
| 931 | 9.2 | 23,207 | 19,996 | 17,261 |

| | | | | |
|---|---|---|---|---|
| * Source: International Critical Tables | | | | |

Suitable methods for pH adjustment of the water effluent from the weak acid cation ion exchange resin include, for example, treatment with weak base anion exchange resin, degassing membrane treatment, sonication and blending with untreated water; the latter is self explanatory and well understood by those skilled in the art. Treatment with weak base anion exchange resin is discussed in further detail in Example 3. Treatment with gas transfer membranes (see Example 4) and sonication is discussed below.

Gas transfer membranes (degassing membranes) represent one method of pH adjustment for the water treatment system of the present invention (see Gas Transfer Membranes - The New Norm in The Water Treatment Market; R.A. Pittman, IWC-99-30, International Water Conference, October 1999). These membranes are typically cross flow hollow fibers with microporous structures.

Sonication of process water is another method of pH control. An example of a sonication device involves an ultrasonic generator and a tank for water transfer and handling. Water is constantly pumped into the transfer tank and sonic energy is applied into this tank effecting removal of carbon dioxide from the water. Ultrasonics deals with sound wave frequencies above the audible range, typically thought to be about 20 kilohertz (kHz). Cavitation (rapid formation and collapse of minute bubbles) is produced by the alternating patterns of compression and rarefaction; degassing is a result of this cavitation step.

Some embodiments of the invention are described in detail in the following Examples. All ratios, parts and percentages are expressed by weight unless otherwise specified, and all reagents used are of good commercial quality unless otherwise specified. Abbreviations used in the Examples and Tables are listed below with the corresponding descriptions.

| | |
|---|---|
| BV = | Bed Volume (volume of ion exchange resin bed, including interstitial water) |
| WAC = | Weak Acid Cation Exchange Resin |
| WBA = | Weak Base Anion Exchange Resin |
| SBA = | Strong Base Anion Exchange Resin |
| kPa = | KiloPascals |

### Example 1

This example demonstrates removal of hardness and alkalinity by a weak acid cation exchange resin (WAC). About 150 cubic centimeters (cm³) of Amberlite™ IRC50 ion exchange resin were placed in a 2.54 centimeter (cm) or 1 inch (in) diameter glass chromatographic column which was 61 cm (24 in) in height. This resin occupied about 30 cm (12 in) of column height. Characteristics of the water to be treated are listed below (all ppm values are expressed as CaCO₃ weight equivalents, where a concentration of 0.01N = 500 ppm CaCO₃):

| | |
|---|---|
| Hardness | 249 ppm |
| Alkalinity | 253 ppm |
| Chloride | 430 ppm |
| Sulfate | 385 ppm |
| pH | 7.2 |

The WAC resin was subjected to a water flowrate of 0.27 liters water/minute-liter resin (2 gallons water/minute-cubic foot resin). The results of this treatment are presented in TABLE 2.

**TABLE 2**

| Effluent Characteristics of Treated Water | | | |
|---|---|---|---|
| **Bed Volumes*** | **Alkalinity (mg/L)** | **Hardness (mg/L)** | **pH** |
| 12 | 0 | 0 | 4.76 |
| 94 | 20 | 0 | 5.08 |
| 159 | 24 | 0 | 5.23 |
| 175 | 24 | 6 | 5.29 |
| 191 | 24 | 10 | 5.38 |
| 257 | 24 | 20 | 5.50 |
| 354 | 41 | 30 | 5.86 |
| 403 | 56 | 52 | 5.94 |
| 469 | 62 | 60 | 6.12 |
| 550 | 76 | 74 | 6.27 |
| 615 | 84 | 84 | 6.35 |
| 664 | 106 | 102 | 6.45 |
| 713 | 120 | 120 | 6.58 |
| 795 | 140 | 140 | 6.69 |
| 876 | 166 | 162 | 6.75 |
| 925 | 202 | 188 | 6.89 |
| 974 | 208 | 206 | 6.99 |
| 1023 | 236 | 228 | 7.04 |

| | | | |
|---|---|---|---|
| * one BV = 150 cm³ | | | |

### Example 2

This example demonstrates regeneration of the weak acid cation exchange resin (WAC) with carbonic acid. Deionized water was carbonated for 1 hour with CO₂ at a pressure of 931 kPA (135 pound per square inch or 9.3 bar). The carbonic acid, delivered at 931 kPa, was passed through the weak acid cation exchange resin at a flowrate of 4 BV/hour. The pressure of the system was maintained throughout the carbonic acid regeneration with a back pressure regulator.

The results of this regeneration are presented in TABLE 3. Approximately 90% regeneration is achieved with approximately 60 bed volumes (BV) of carbonic acid. In a typical operation, the regeneration would be carried out so that about 60-70% regeneration is achieved on the first cycle (equivalent to terminating the regeneration process after the 25-30 BV point in TABLE 3). On subsequent cycles, using the same number of bed volumes of carbonic acid, the regeneration level would approach 100 % of what was loaded on the previous cycle. This is representative of typical operation to balance efficiency of hardness/alkalinity removal and regeneration using an ion exchange resin system.

**TABLE 3**

| Carbonic Acid Regeneration of Weak Acid Resin 4 BV/Hr at 931 kPa | | |
|---|---|---|
| **BV** | **Total Regeneration (g)*** | **% Regeneration** |
| 0 | 0 | 0 |
| 1.36 | 0.015 | 0.1 |
| 3.28 | 0.327 | 2 |
| 7.34 | 2.40 | 13 |
| 11.4 | 4.69 | 26 |
| 17.1 | 7.33 | 40 |
| 24.9 | 10.1 | 55 |
| 36.2 | 12.8 | 70.5 |
| 47.3 | 14.7 | 81 |
| 51.0 | 15.2 | 84 |
| 54.7 | 15.7 | 86 |
| 60.4 | 16.2 | 89.5 |
| 66.0 | 16.7 | 92 |
| 71.8 | 17.2 | 95 |

| | | |
|---|---|---|
| * originally loaded with 18 grams (g) hardness (CaCO₃) | | |

### Example 3

This example illustrates the use of a weak base anion exchange resin (WBA) for pH adjustment following water treatment with a weak acid cation exchange resin (WAC) for general dealkalization. The weak acid cation exchange resin evaluated was an acrylic resin (IMAC™ HP333 ion exchange resin) and the weak base anion exchange resin was an acrylic tertiary amine resin (Amberlite™ IRA67 resin); IMAC™ and Amberlite™ ion exchange resins are available from Rohm and Haas Company, Philadelphia, PA, USA. Anion exchange resins based on crosslinked styrenic polymers with tertiary amine functionality may also be used for pH adjustment.

A column of weak acid cation resin (**1** equivalent) in the hydrogen form was placed in series with a column of weak base resin (0.5 equivalent) in the free base form (corresponding to vessels **2** and **3**, respectively, in Figure **1**). The water influent contained approximately equivalent levels of hardness and alkalinity (about 150 ppm as CaCO₃). The relative ratio (equivalents) of weak acid cation resin to weak base anion resin is typically from 1/0.3 to 1/2 and preferably from 1/0.5 to 1/1.

The effluent from the weak acid cation resin contained less than 20 ppm of hardness and alkalinity with a corresponding pH of 3.1 to 4.3. This water stream was then passed directly through the weak base anion exchange resin. The hardness levels and alkalinity levels were substantially unchanged after pH adjustment with the weak base resin; the pH varied between 6.1 and 8.6. The data are summarized in TABLE 4, illustrating that the weak base anion exchange resin was effective at pH adjustment, that is, maintaining the pH of the treated water at 6 and above.

**TABLE 4**

| pH Adjustment with Weak Base Anion Exchange Resin | | | |
|---|---|---|---|
| **Bed Volumes** | **Influent pH** | **pH After WAC** | **pH After WBA** |
| 54 | 7.18 | 3.13 | 8.59 |
| 107 | 7.29 | 3.22 | 8.49 |
| 161 | 7.18 | 3.27 | 8.22 |
| 214 | 7.23 | 3.33 | 7.25 |
| 268 | 7.33 | 3.45 | 6.51 |
| 321 | 7.37 | 3.58 | 6.22 |
| 375 | 7.37 | 3.98 | 6.15 |
| 428 | 7.43 | 4.26 | 6.42 |
| 482 | 7.58 | 4.32 | 6.43 |
| 535 | 7.33 | 4.27 | 6.17 |
| 589 | 7.36 | 4.31 | 6.09 |

### Example 4

This example illustrates the use of a gas transfer membrane for pH adjustment following water treatment with a weak acid cation exchange resin (WAC) for general dealkalization. A Liqui-Cel™ Extra-Flow Membrane Contactor (available from Celgard LLC, Charlotte, NC, USA) was used with the following results: deionized water was carbonated with CO₂ at a pressure of 100 to 110 kPa pressure in a stainless steel tank. The pH of this carbonated water was measured to be 4.35. The carbonated water was passed through the membrane cartridge unit at a flowrate of 1.5 L/min (slight vacuum on outer side of membrane). The pH of the effluent water was measured as a function of time: 6.3 (2 min), 6.7 (5 min) and 6.8 (8 min). The gas membrane effectively adjusted the pH of the treated water.

## Claims

1. A method for treating water comprising:
(a) passing water to be treated through an inlet of a first vessel containing 5 to 140 liters of a weak acid cation exchange resin until 30 to 80 percent of available ion exchange capacity, based on equivalents, of the weak acid cation exchange resin has been exhausted, to provide treated water at an end use outlet at an instantaneous flow rate of 4 to 40 liters per minute and at end use outlet pressures within zero to 200 kiloPascals of inlet pressures, so that the treated water has hardness and alkalinity values of less than 150 parts per million, expressed as calcium carbonate weight equivalents; then
(b) regenerating the weak acid cation exchange resin for reuse in step (a) with a regenerant agent selected from weak acids having a pKₐ between 3 and 7, for a time sufficient to regenerate from 50 to 100 percent, based on equivalents, of the exhausted ion exchange capacity produced in step (a); and
(c) repeating steps (a) and (b) to provide treated water as needed.

2. The method of claim 1 further comprising adjusting the pH of the treated water from step (a) to a pH between 4.5 and 9.5 by one or more processes selected from treatment with weak base anion exchange resin, degassing membrane treatment, sonication and blending with untreated water, at a point prior to the end use outlet and after the vessel containing the weak acid cation exchange resin.

3. A method for treating water, comprising:
(a) passing water to be treated through an inlet of a first vessel containing 5 to 140 liters of a weak acid cation exchange resin until 30 to 80 percent of available ion exchange capacity, based on equivalents, of the weak acid cation exchange resin has been exhausted, to provide treated water at an end use outlet at an instantaneous flow rate of 4 to 40 liters per minute and at end use outlet pressures within zero to 200 kiloPascals of inlet pressures, so that the treated water has hardness and alkalinity values of less than 150 parts per million, expressed as calcium carbonate weight equivalents; and
(b) adjusting the pH of the treated water to a pH between 4.5 and 9.5 by one or more processes selected from treatment with weak base anion exchange resin, degassing membrane treatment, sonication and blending with untreated water, at a point prior to the end use outlet and after the vessel containing the weak acid cation exchange resin.

4. A regenerable water treatment system comprising:
(a) a treatment cycle comprising 5 to 140 liters of a weak acid cation exchange resin in a first vessel having an inlet and an outlet through which water to be treated is passed until 30 to 80 percent of available ion exchange capacity, based on equivalents, of the weak acid cation exchange resin has been exhausted, to provide treated water at an end use outlet at an instantaneous flow rate of 4 to 40 liters per minute and at end use outlet pressures within zero to 200 kiloPascals of inlet pressures, so that the treated water has hardness and alkalinity values of less than 150 parts per million, expressed as calcium carbonate weight equivalents; and
(b) a regeneration cycle comprising a regenerant agent selected from weak acids having a pKₐ between 3 and 7, which is contacted with the weak acid cation exchange resin after the treatment cycle for a time sufficient to regenerate from 50 to 100 percent, based on equivalents, of the exhausted ion exchange capacity produced in the treatment cycle;
wherein the treatment and regeneration cycles are repeated to provide treated water as needed.

5. The water treatment system of claim 4 further comprising, as part of the treatment cycle, a pH adjustment means selected from one or more of weak base anion exchange resin treatment, degassing membrane treatment, sonication and blending with untreated water; wherein the water treated with the weak acid cation exchange resin is adjusted to a pH of between 4.5 and 9.5 by contact with the pH adjustment means.

6. The water treatment system of claim 4 further comprising, as part of the treatment cycle, a second vessel connected in parallel fashion relative to the first vessel so that the weak acid cation exchange resin in the first vessel is concurrently regenerated in the regeneration cycle during the passing of water through the second vessel; wherein the weak acid cation exchange resin in the first and second vessels have a combined volume of 5 to 140 liters.

7. A water treatment system comprising:
(a) a dealkalization cycle comprising 5 to 140 liters of a weak acid cation exchange resin in a first vessel having an inlet and an outlet through which water to be treated is passed until 30 to 80 percent of available ion exchange capacity, based on equivalents, of the weak acid cation exchange resin has been exhausted, to provide treated water at an end use outlet at an instantaneous flow rate of 4 to 40 liters per minute and at end use outlet pressures within zero to 200 kiloPascals of inlet pressures, so that the treated water has hardness and alkalinity values of less than 150 parts per million, expressed as calcium carbonate weight equivalents; and
(b) a pH adjustment cycle comprising a pH adjustment means selected from one or more of weak base anion exchange resin treatment, degassing membrane treatment, sonication and blending with untreated water; wherein the water treated with the weak acid cation exchange resin is adjusted to a pH of between 4.5 and 9.5 by contact with the pH adjustment means.

8. The water treatment system of claim 7 further comprising, as part of the dealkalization cycle, a second vessel connected in parallel fashion relative to the first vessel so that partially exhausted weak acid cation exchange resin in the first vessel may be replaced with regenerated weak acid cation exchange resin during the passing of water through the second vessel and the dealkalization cycle is conducted alternately in the first and second vessels to provide treated water as needed; wherein the weak acid cation exchange resin in the first and second vessels have a combined volume of 5 to 140 liters.

9. A water treatment apparatus comprising:
(a) a first vessel equipped with an inlet and an outlet, the first vessel containing weak acid cation ion exchange resin;
(b) a second vessel equipped with an inlet and an outlet, the second vessel containing a means for adjusting pH of treated water; and
(c) a third vessel, equipped with an inlet and an outlet, the third vessel containing regenerant agent suitable for regenerating weak acid cation ion exchange resin within the first vessel (a);
wherein the second vessel is flowably connected in series with the outlet of the first vessel, the third vessel is flowably connected in series with the first vessel and the second and third vessels are not otherwise connected; and wherein each of the vessels is flowably connected as indicated by a plurality of valve means.

10. The water treatment apparatus of claim 9 further comprising a fourth vessel, containing weak acid cation exchange resin, flowably connected in parallel fashion relative to the first vessel at points immediately prior to and immediately after the first vessel by valve means so that water flow may be alternately switched between the first vessel and the fourth vessel.
